# EUROPÄISCHE PATENTSCHRIFT

(11) **EP 3 467 006 B1**
(45) Veröffentlichungstag und Bekanntmachung des Hinweises auf die Patenterteilung: **30.11.2022**
(21) Anmeldenummer: 17195510.7
(22) Anmeldetag: 09.10.2017
(51) Int. Cl.: C08G 77/06, C08G 77/10, C08L 83/04

(54) **MISCHUNGEN ZYKLISCHER-VERZWEIGTER SILOXANE VOM D/T-TYP UND DEREN FOLGEPRODUKTE**
MIXTURES OF CYCLIC BRANCHED D/T-TYPE SILOXANES AND THEIR ENSUING PRODUCTS
MÉLANGES DE SILOXANES RAMIFIÉS-CYCLIQUES DE TYPE D/T ET LEURS PRODUITS SECONDAIRES

(43) Veröffentlichungstag der Anmeldung: 10.04.2019
(73) Patentinhaber: Evonik Operations GmbH, 45128 Essen (DE)
(72) Erfinder: KNOTT, Wilfried, 45355 Essen (DE); DUDZIK, Horst, 45326 Essen (DE)
(74) Vertreter: Evonik Patent Association

(56) Entgegenhaltungen:
- US-A1- 2010 239 771
- US-A1- 2011 076 409

## Beschreibung

Die Erfindung betrifft ein Verfahren zur Herstellung von Mischungen zyklisch-verzweigter Siloxane vom D/T-Typ, die Mischungen zyklisch-verzweigten Siloxane des D/T-Typs selbst sowie die Verfahren zur Verarbeitung dieser Siloxane zu funktionalisierten verzweigten Siloxanen und / oder verzweigten Siliconölen.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Bei der Herstellung organomodifizierter Siloxane, insbesondere verzweigter funktionstragender Siloxane sieht man sich häufig der Schwierigkeit gegenüber, dass konkurrierende Prozesse gleichzeitig in der Reaktionsmatrix stattfinden, die die Qualität des angestrebten Produktes negativ beeinflussen können.

Kondensation und Äquilibrierung zählen zu diesen konkurrierenden Prozessen, die je nach synthetischer Fragestellung gesondert zu berücksichtigen sind. Eine große Herausforderung stellt die gleichmäßige Verteilung von Verzweigungsstellen entlang einer Siloxankette dar (Vermeidung von T-strukturierten Domänen). Wie man der Literatur entlehnen kann, ist das Aufbrechen homologer, aus T-Einheiten bestehender Siloxanketten gerade unter Säurekatalyse schwierig und somit bei Präsenz empfindlicher funktioneller Gruppen de facto nicht zu leisten. Zum Reaktivitätsverhalten von M-, D- und T-Einheiten sei auf M.A. Brook, "Silicon in Organic, Organometallic and Polymer Chemistry", John Wiley & Sons, Inc., New York (2000), S. 264 ff. verwiesen.

Insbesondere bei der Herstellung von reaktiven SiH-Gruppen tragenden, verzweigten Siloxanen sind darum stets erhebliche Anstrengungen zu unternehmen, die Forderung nach einer möglichst statistischen Gleichverteilung von Siloxaneinheiten mit der Forderung nach dem weitestgehenden Erhalt des wertvollen, am Silizium gebundenen Wasserstoffs in Einklang zu bringen.

Polyorganosiloxane werden nach dem Stand der Technik durch Hydrolyse und Kondensation ausgehend von gemischt substituierten Methyl-chlor-wasserstoff-silanen hergestellt. Eine direkte hydrolytische Kondensation von wasserstoffhaltigen Silanen, wie z. B. Dimethylmonochlorsilan oder Methyldichlorsilan, wird beispielsweise in der US 2758124 beschrieben. Man trennt darin die sich bei der Hydrolyse separierende Siloxanphase von der salzsauren Wasserphase ab. Da dieser Prozess anfällig für Vergelungen der Wasserstoffsiloxane ist, beschreibt die DE 1125180 ein verbessertes Verfahren unter Nutzung einer organischen Hilfsphase, bei dem das gebildete Wasserstoffsiloxan in einem organischen Lösungsmittel als separate Phase gelöst vorliegt und nach Abtrennung von der sauren Wasserphase und Abdestillation des Lösungsmittels beständig gegen Vergelung ist. Eine weitere Prozessverbesserung im Hinblick auf einen minimierten Lösungsmitteleinsatz beschreibt die EP 0967236 und führt in ihrer Lehre aus, vorerst nur geringe Wassermengen in der hydrolytischen Kondensation der Organochlorsilane einzusetzen, so dass im ersten Schritt Chlorwasserstoff gasförmig ausgetrieben wird und als Wertstoff unmittelbar weiteren Verwendungszwecken zugeführt werden kann.

Verzweigte organomodifizierte Polysiloxane können durch eine Vielzahl an Strukturen beschrieben werden. Generell muss unterschieden werden zwischen einer Verzweigung oder Vernetzung, die über die organischen Substituenten eingebracht wird und einer Verzweigung oder Vernetzung innerhalb der Siliconkette. Organische Vernetzer zur Verknüpfung SiH-Gruppen tragender Siloxangerüste sind beispielsweise a, ω-ungesättigte Diolefine, Divinyl-Verbindungen oder Diallyl-Verbindungen, wie beispielsweise in US 6730749 oder EP 0381318 beschrieben. Diese der Äquilibrierung nachgeschaltete Vernetzung durch Platin-katalysierte Hydrosilylierung bedeutet einen zusätzlichen Verfahrensschritt, bei dem sowohl intramolekulare Verknüpfungen als auch intermolekulare Verknüpfungen stattfinden können. Die Produkteigenschaften werden zudem stark beeinflusst von den unterschiedlichen Reaktivitäten der zu Peroxidbildung neigenden, niedermolekularen organischen, difunktionellen Verbindungen.

Eine multiple Vernetzung des Siliconblocks eines organomodifizierten Polysiloxans mit dem organischen Blockcopolymer kann auf verschiedene Arten erfolgen. Die EP 0675151 beschreibt die Herstellung eines Polyethersiloxans durch Hydrosilylierung eines Wasserstoffsiloxans mit einem Unterschuss an hydroxyfunktionellem Allylpolyether, bei der nicht umgesetzte SiH-Funktionen unter Zugabe von Natriummethylat mit den Hydroxylgruppen der Polyethersubstituenten über eine SiOC-Bindung verknüpft werden. Der Molmassenaufbau führt zu einer breiten Streuung der Produkteigenschaften, wie z. B. der Viskosität. Einen ähnlichen Ansatz zum Aufbau verzweigter Systeme beschreibt die US 4631208, bei der hydroxyfunktionelle Polyethersiloxane mittels Trialkoxysilanen quervernetzt werden. Beide Methoden führen zu einer intermolekularen Vernetzung der Polyethersiloxane mit sowohl schwierig zu steuerndem Molmassenaufbau als auch damit einhergehenden, unvorhersehbaren Viskositätsanstiegen. Man erhält bei Verfolgung der vorgenannten Methoden keine Verzweigung innerhalb des Siloxanteils bei konstanter Molekularmasse, sondern eine Quervernetzung zu makromolekularen Multiblockcopolymeren.

Eine Verzweigung innerhalb der Siloxankette muss daher bereits bei der Herstellung des Wasserstoffsiloxans erfolgen, um die beschriebenen Nachteile der Quervernetzung zu umgehen. Verzweigungen innerhalb der Siloxankette bedingen den synthetischen Einbau von trifunktionellen Silanen, wie z. B. Trichlorsilanen oder Trialkoxysilanen.

Wie dem Fachmann bekannt ist, steigt die Hydrolysegeschwindigkeit der Organochlorsilane in folgender Reihe (C. Eaborn, Organosilicon Compounds, Butterworths Scientific Publications, London I960, S. 179)

SiCl₄ > RSiCl₃ » R₂SiCl₂ > R₃SiCl-

Daher besteht bei den Hydrolyse und Kondensationsreaktionen von Trichlorsilanen eine erhöhte Tendenz zur Bildung hochvernetzter Gele im Vergleich zu den langsamer verlaufenden Hydrolyse und Kondensationsreaktionen von difunktionellen und monofunktionellen Organochlorsilanen. Die etablierten Verfahren zur Hydrolyse und Kondensation von Dichlor- und Monochlorsilanen sind daher nicht ohne weiteres auf Trichlorsilane übertragbar, sondern es müssen Umwege über Mehrstufenprozesse beschritten werden.

Aufbauend auf dieser Erkenntnis, muss auch die Herstellung von einfach verzweigten Wasserstoffsiloxanen durch Einbau von maximal einem trifunktionellen Monomer pro Siloxankette gemäß dem Stand der Technik zweistufig durchgeführt werden. In einem ersten Schritt wird ein trifunktionelles, niedermolekulares Wasserstoffsiloxan durch Hydrolyse und Kondensation aus 1, 1, 3, 3-Tetramethyldisiloxan und Methyltriethoxysilan hergestellt, wie z.B. die DE 3716372 lehrt. Erst in einem zweiten Schritt kann dann eine Äquilibrierung mit cyclischen Siloxanen zu höheren Molgewichten erfolgen, wie die DE 102005004676 ausführt. Zur weiteren Umsetzung - und daher erst in einem dritten Schritt - kann das so hergestellte, einfach verzweigte Wasserstoffsiloxan nach den an sich bekannten Methoden zur Funktionalisierung SiH-Gruppen aufweisender Siloxanverbindungen mit organischen Substituenten versehen werden.

Zur Synthese mehrfach verzweigter Wasserstoffsiloxane, die per Definition mehr als ein trifunktionelles Monomer pro Siloxankette aufweisen, finden sich im Stand der Technik ebenfalls zweistufige Synthesen. Prinzipiell hat man die Möglichkeit von Wasserstoffsiloxanen auszugehen und die SiH-Funktionen unter Zugabe von Wasser und Edelmetallkatalysator dehydrogenativ in Silanole umzuwandeln, die anschließend wiederum mit Wasserstoffsiloxanen kondensiert werden. Beschrieben wird diese Vorgehensweise in US 6790451 und in EP 1717260. Abgesehen von den Kosten der Edelmetallkatalyse erschwert die schlechte Lagerstabilität der zu Autokondensation neigenden Silanole eine reproduzierbare, kontrollierte Prozessführung.

Eine weitere, in US 6790451 beschriebene Möglichkeit besteht in der Herstellung eines Copolymerisats aus Trichlormethylsilan oder Trialkoxymethylsilan mit Hexamethyldisiloxan oder Trimethylchlorsilan, dort auch MT-Polymer genannt, welches in einem zweiten Schritt gemeinsam mit einem Polydimethyl (methylhydrogen) siloxancopolymer äquilibriert wird. Die Herstellung solcher MT-Polymere erfordert den Einsatz starker Basen oder starker Säuren teils in Kombination mit hohen Reaktionstemperaturen und bringt Präpolymere derart hoher Viskosität hervor, dass deren Neutralisation beträchtlich erschwert und somit die Weiterverarbeitung zu Endprodukten konstanter Zusammensetzung und Qualität signifikant eingeschränkt ist.

Gemäß EP 0675151 wird zuerst die Hydrolyse und Kondensation des SiH-freien, verzweigten Siliconpolymers in Xylol derartig durchgeführt, dass man mit einem großen Überschuss an Hexamethyldisiloxan den Endverschluss des Vorkondensates durchführt und im zweiten Schritt die Äquilibrierung mit Methylhydrogenpolysiloxan zu einem verzweigten Wasserstoffsiloxan vornimmt (Herstellvorschrift 6, ibid.). Alternativ stellt die Lehre der EP 0675151 auf eine Fahrweise zur Herstellung nicht SiH-funktioneller verzweigter Siloxane ab, die lediglich eine Teilkondensation des eingesetzten Methyltrichlorsilans beinhaltet (Herstellvorschrift 7, ibid.). Diese beiden Strategien des Vorgehens adressieren jedoch das Bedürfnis nach einer universell nutzbaren Herstellmethode für verzweigte Siloxane nicht.

Die WO2009065644 A1 lehrt ein Verfahren zur Herstellung von verzweigten SiH-funktionellen Siloxanen durch Umsetzung einer Mischung enthaltend

a) ein oder mehrere SiH-funktionelle Siloxane, b) ein oder mehrere SiH-funktions-freie Siloxane und c) ein oder mehrere Trialkoxysilane unter Zugabe von Wasser und in Anwesenheit von mindestens einem Brönstedt-sauren Katalysator, wobei die Umsetzung in einem Verfahrensschritt durchgeführt wird. Die technischen Grenzen dieses Prozesses im Hinblick auf den Erhalt der in das System hineingebrachten SiH-Funktionalität werden aus der dortigen Offenbarung deutlich. Es zeigt sich die Notwendigkeit, für empfindliche SiH-funktionelle verzweigte Siloxanstrukturen mit mindestens zwei sauren Katalysatoren (Trifluormethansulfonsäure vs. Trifluormethansulfonsäure und sulfonsaures lonenaustauscherharz, ibid. Beispiele 5 und 6) arbeiten zu müssen, wodurch das Verfahren in seiner technischen Realisierung aufwendig und kostspielig wird.

Über die mögliche Existenz ausschließlich aus D- und T- Einheiten aufgebauter Siloxane wurde in der Literatur bereits spekuliert. Wie W. Noll in Chemie und Technologie der Silicone, Weinheim (1960), Seite 182 ausführt, geht auf D.W. Scott (J. Am. Chem. Soc. 68, 356, 1946) der Hinweis zurück, dass sich aus einer extrem verdünnten Co-Hydrolyse von Dimethyldichlorsilan und Methyltrichlorsilan mit anschließender thermischer Umlagerung bicyclische Verbindungen von D- und T- Einheiten aufweisenden Siloxanen herleiten. Aus dem viskosen Co-Hydrolysat konnten bei Sumpftemperaturen zwischen 350 und 600°C Isomere in Mengen von noch nicht einmal 1% isoliert und danach kryoskopisch sowie elementaranalytisch mit sehr großen Unsicherheiten behaftet beschrieben werden. Scott spekuliert, dass seine D-T-Strukturen aufweisenden Verbindungen unmittelbar miteinander und nicht über D-Einheiten verknüpfte T-Strukturelemente enthalten. Die Interpretation der Ergebnisse beruht bei Scott auf der Prämisse, dass alle im Co-Hydrolysat enthaltenen SiC-Bindungen die von ihm gewählte, drastische thermische Behandlung überstehen.

Makarova et al. (Polyhedron Vol. 2, No. 4, 257-260 (1983)) haben 10 oligomere Methylsiloxane mit cyclischen und linearen Segmenten durch die gezielte, kalte Kondensation von SiCl-Gruppen enthaltenden mit SiOH-Gruppen aufweisenden Siloxanen in Gegenwart organischer Amine wie Triethylamin oder Anilin in Benzol oder Diethylether als Solventien hergestellt, die ausgefällten Aminhydrochloride abgetrennt, die rohen Reaktionsprodukte gewaschen und danach fraktioniert destilliert. Anschließend wurden die bicyclischen Methylsiloxane der Pyrolyse bei Temperaturen zwischen 400 und 600°C unterworfen und die Pyrolyseprodukte gaschromatographisch charakterisiert. Die im Rahmen dieser Studie eingesetzten niedermolekularen Verbindungen wie z.B. Hydroxynonamethylcyclopentasiloxan, Hydroxyheptamethylcyclotetrasiloxan, Dihydroxytetramethyldisiloxan sind aus Sicht der im industriellen Maßstab betriebenen Silikonchemie als rein akademische Exoten zu betrachten.

Insbesondere sind die auf diesem Wege synthetisierten, Molmassen-definierten, kettenreinen Siloxanverbindungen des D/T-Typs nicht geeignet für die Herstellung von organomodifizierten Siloxanen, die Eingang in anspruchsvolle technische Anwendungen wie z.B. in die PU-Schaumstabilisierung oder in die Entschäumung von Kraftstoffen, etc. nehmen. Wirkstoffe, die ein derartiges Anwendungsgebiet effektiv adressieren, sind stets von einer breiten Oligomerverteilung umfassend hohe, mittlere und niedrige Molmassen gekennzeichnet, da den darin enthaltenen Oligomeren in Abhängigkeit von ihrer Molmasse und damit ihres Diffusionsverhaltens sehr oft differenzierte tensidische Aufgaben in unterschiedlichen Zeitfenstern des jeweiligen Prozesses zuzuschreiben sind. Speziell im Falle der verzweigten organomodifizierten Siloxane sind dem eingangs diskutierten Reaktivitätsverhalten von M-, D- und T-Einheiten geschuldet eine gute Oligomerverteilung kombiniert mit einer möglichst statistischen Gleichverteilung von Siloxaneinheiten in den individuellen Molekülen jedoch nur dann zu erzielen, wenn das eingesetzte Startmaterial vom D/T-Typ bereits selbst einer Verteilungsfunktion genügt. Das gilt umso mehr, wenn die Organomodifizierung über ein SiH-Gruppen tragendes Intermediat erfolgt.

Bei Würdigung dieses Standes der Technik zeichnet sich keine wirkliche Lösung zur Herstellung verzweigter organomodifizierter Siloxane ab.

Die europäische Patentanmeldung mit dem Aktenzeichen 17156421.4 stellt auf einen Herstellprozess zur Gewinnung verzweigter organomodifizierter Siloxane ab, der beinhaltet, dass man (a) in einem ersten Schritt zyklisch-verzweigte Siloxane vom D/T-Typ durch die Reaktion von Trialkoxysilan ausschließlich mit Siloxancyclen und/oder α,ω- Dihydroxy-polydimethylsiloxan in einem Lösemittel herstellt und (b) in einem zweiten Schritt die Funktionalisierung dieser zyklisch-verzweigten Siloxane durch saure Äquilibrierung mit funktionellen Silanen und/ oder Siloxanen vornimmt. Die aus dem ersten Schritt hervorgehenden Mischungen zyklischer-verzweigter, ausschließlich D- und T-Einheiten aufweisender Siloxane ohne funktionelle Gruppen sind gemäß jener Schrift dadurch gekennzeichnet, dass der mit ²⁹Si-NMR-Spektroskopie bestimmbare summarische Anteil der in der Siloxanmatrix vorhandenen D- und T-Einheiten, die Si-Alkoxy- beziehungsweise SiOH-Gruppen aufweisen kleiner gleich 2 Molprozent ist, so dass sich keine signifikanten Anteile der aus der ersten Stufe stammenden Si-Alkoxy- bzw. SiOH-Gruppen im zweiten Schritt durchschleppen und molekular konservieren. Hierzu werden gemäß jener Schrift im ersten Schritt siliciumfreie Lösemittel, die flüssige (Alkyl)aromaten wie z.B. Toluol, die isomeren Xylole, Cycloaliphaten wie z.B. Cyclohexan, aber auch Diethylcarbonat umfassen, eingesetzt, besonders bevorzugt Toluol. Das in der Patentanmeldung mit dem Aktenzeichen 17156421.4 offenbarte Verfahren erschließt in einfacher Weise über die Zwischenproduktstufe der DT-Siloxane den Zugang zu funktionstragenden verzweigten Siloxanen oder auch zu verzweigten Siliconölen. Unter dem Aspekt der technischen Auslegung kann bei jenem Verfahren jedoch die Notwendigkeit der Verwendung von Lösungsmittel wie insbesondere Toluol möglicherweise als Nachteil angesehen werden, denn im Umfeld eines speziell organomodifizierte Siloxane herstellenden Produktionsbetriebes ist die organische Hilfsphase stets eine eher unliebsame Fremdphase, z.B. mit Blick auf deren Abtrennung, Aufreinigung und Rückführung in den Gesamtprozess. Der Gewährleistung nicht querkontaminierter Stoffströme kommt neben Aspekten der sicheren Lagerung, Handhabung und Entsorgung eine besondere Bedeutung zu.

Diese Gesichtspunkte aufgreifend, stellt die europäische Patentanmeldung mit dem Aktenzeichen 17169876.4 auf einen Prozess zur Herstellung von Mischungen zyklischer-verzweigter, ausschließlich D- und T-Einheiten aufweisender Siloxane unter Einsatz siliziumhaltiger Lösungsmittel, vorzugsweise einfacher Siloxancyclen ab.

Dieses Verfahren umfasst eine sauer katalysierte Äquilibrierung von Trialkoxysilanen mit Siloxancyclen und/oder α,ω- Dihydroxy-polydimethylsiloxan in Anwesenheit von mindestens einem sauren Katalysator und danach eine durch Wasserzugabe eingeleitete Hydrolyse- und Kondensationsreaktion mit einer sich daran anschließenden Verwendung eines Silicium-haltigen Lösemittels, gefolgt von einer destillativen Abtrennung des freigesetzten Alkohols, im System vorhandenen Wassers und Silicum-haltigen Lösemittels sowie einer Neutralisation oder Abtrennung des sauren Katalysators und gegebenenfalls Abtrennung womöglich gebildeter Salze.

Verglichen mit dem erzielbaren Grad an Hydrolyse und Kondensation des Verfahrens, der unter dem Aktenzeichen 17156421.4 geführten, ebenfalls noch nicht veröffentlichten Patentanmeldung, die auf den Einsatz nicht siliziumhaltiger Lösungsmittel abstellt, ist der mit ²⁹Si-NMR-Spektroskopie bestimmbare summarische Anteil der in der Siloxanmatrix vorhandenen D- und T-Einheiten, die Si-Alkoxybeziehungsweise SiOH-Gruppen aufweisen jedoch größer 2 und kleiner 10 Molprozent, das heißt, der Kondensationsgrad ist deutlich niedriger.

Als Konsequenz hieraus leitet sich ein deutlich erhöhter technischer Aufwand her, den man treiben muss, um derartig hergestellte zyklisch-verzweigte Siloxane vom D/T-Typ zu funktionalisierten verzweigten Siloxanen und / oder verzweigten Siliconölen zu verarbeiten. Man greift auf die erhöhte Menge an teurer Äquilibriersäure, oder das Anlegen eines Hilfsvakuums und/ oder die sequenzierte Zugabe der Äquilibriersäure zurück, um eine Weiterverarbeitung der von erhöhter Si-Alkoxy- bzw. Si-OH-Konzentration gekennzeichneten DT-Siloxane als Systemen niedrigen Kondensationsgrades zu ermöglichen.

Andererseits liegt der Vorteil der Patentanmeldung mit dem Aktenzeichen 17169876.4 darin, dass die im Rahmen der Herstellung zyklisch verzweigter DT-Siloxane anfallenden Lösungsmittelgemische von einfacherer Natur sind als diejenigen, die nach dem Verfahren, der unter dem Aktenzeichen 17156421.4 geführten. Der letztgenannten Lehre folgend, sieht man sich beispielsweise mit Lösungsmittelsystemen konfrontiert, die aus Toluol/ Ethanol/ Wasser oder aber auch aus Ethanol/Toluol bestehen, während das in siliziumhaltigen Lösungsmitteln durchgeführte Verfahren beispielsweise nur die thermische Abtrennung eines Ethanol-Wasser-Gemisches bedingt.

Der für die Rückgewinnung des Toluols zu treibende Aufwand ist beträchtlich und schmälert die Attraktivität des ansonsten sehr zielführenden chemischen Prozesses.

Der Recycling-Aspekt der bei chemischen Verfahren eingesetzten und / oder anfallenden Lösungsmittel gewinnt im Sinne der Wirtschaftlichkeit aber auch der allgemeinen, sich stets verschärfenden Nachhaltigkeitsdiskussion zunehmend an Bedeutung.

US2011/076409 A1 und US2010/239771 A1 offenbaren überwiegend aus D- und T-Einheiten bestehende DT-Polysiloxane mit typischerweise mindestens 10 Gew.-% hilfsweise 10-40 Gew.-% SiOR und/oder SiOH Gruppen sowie ein Verfahren zur Herstellung von DT-Polysiloxanen durch Hydrolyse von Methyltrimethoxysilan, Octamethylcyclotetrasiloxan und Octyltriethoxysilan in Anwesenheit von Trifluormethansulfonsäure bei 68-70 °C.

Überraschenderweise wurde nun ein Verfahren zur Herstellung von Mischungen zyklischer-verzweigter, ausschließlich D- und T-Einheiten aufweisender Siloxane gefunden, das vorteilhaft sowohl im Sinne des Recyclings der anfallenden Lösungsmittel, aber auch für die Erzielung eines hohen Kondensationsgrades ist.

Das erfindungsgemäße Verfahren sieht insbesondere vor, die sauer katalysierte Äquilibrierung von Trialkoxysilanen mit Siloxancyclen und/oder α,ω-Dihydroxy-polydimethylsiloxan, mit anschließender Zugabe von Wasser und als Lösungsmittel fungierenden einfachen Siloxancyclen und daran anschließender destillativer Abtrennung eines Alkohol/ Wasser-Gemisches durchzuführen und dann nach Hinzufügen von Toluol durch Abdestillieren eines Toluol/ Wasser-Gemisches den äquilibrierenden Einbau der zuvor als Lösungsmittel fungierenden einfachen Siloxanzyklen sowie die Hydrolyse- und Kondensationsreaktion so weit voranzutreiben, dass der mit ²⁹Si-NMR-Spektroskopie bestimmbare summarische Anteil der in der Siloxanmatrix vorhandenen D- und T-Einheiten, die Si-Alkoxybeziehungsweise SiOH-Gruppen aufweisen kleiner gleich 2 Molprozent ist.

Erfindungsgemäß erweist sich der kombinierte, nacheinander erfolgende Einsatz von siliziumhaltigen und siliziumfreien Lösungsmitteln als besonders vorteilhaft, da er die Abtrennung eines einfach zu entsorgenden Alkohol/ Wasser-Gemisches sowie die saubere Abtrennung des Prozesshilfsmittels Toluol erlaubt, da sich das destillativ entfernte Toluol/ Wasser-Gemisch in kondensierter Phase vollständig dichtesepariert auftrennt. Damit ist dem wichtigen Recycling-Gedanken Genüge getan, da sich das abgeschiedene sehr reine Toluol (siehe hierzu die gaschromatographische Analyse des erfindungsgemäßen Beispiels 1) bei Bedarf wieder einfach in den Prozess einschleusen lässt.

Darüber hinaus gestatten die nach dem erfindungsgemäßen Verfahren hergestellten Mischungen zyklisch-verzweigter Siloxane vom D/T-Typ, die einen spektroskopisch bestimmten Anteil an Si-Alkoxybeziehungsweise SiOH von kleiner gleich 2 Molprozent bezogen auf die spektroskopisch erfasste Gesamtheit an Silizium besitzen, die Verarbeitung zu den entsprechenden funktionalisierten verzweigten Siloxanen und / oder verzweigten Siliconölen unter säurekatalysierter Äquilibrierung ohne Anpassung üblicher Standardäquilibrierbedingungen (wie vorzugsweise: 0,1 Gew.-% Trifluormethansulfonsäure-Zusatz, 40°C ≤ Reaktionstemperatur ≤ 60°C, Reaktionszeit 6 Stunden), was im Übrigen einer bevorzugten Ausführungsform des erfindungsgemäßen Verfahrens entspricht.

Somit vereint die vorliegende Erfindung sowohl den Vorteil, Mischungen zyklisch-verzweigter Siloxane vom D/T-Typ mit einem hohen Kondensationsgrad und damit einer leichten Weiterverarbeitbarkeit zugänglich zu machen als auch den Vorteil, dass unter dem Gesichtspunkt der Nachhaltigkeit nur wenige und darüber hinaus leicht zu entsorgende Abfälle entstehen.

Ein besonderer, zusätzlicher Vorteil der Erfindung liegt darin, dass die erfindungsgemäßen

Mischungen sich darüber hinaus durch eine exzellente Lagerstabilität, selbst bei Lagerung an Luft und unter hohen Temperaturen, auszeichnen. Eine Verfestigung oder sogar Durchhärtung tritt nicht auf, auch nicht nach monatelanger Lagerung an Luft bei erhöhten Temperaturen.

Damit ergeben sich die folgenden Gegenstände der Erfindung.

Ein Gegenstand der Erfindung sind Mischungen zyklischer-verzweigter, ausschließlich D- und T-Einheiten aufweisender Siloxane mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und weiterhin umfassend zumindest 5 Gew.-% Siloxancyclen, wie vorzugsweise Oktamethylcyclotetrasiloxan (D₄), Dekamethylcyclopentasiloxan (D₅), Dodekamethylcyclohexasiloxan (D₆) und/oder deren Mischungen. Die erfindungsgemäß hergestellten Siloxane weisen keine weiteren funktionellen Gruppen auf.

Ein weiterer Gegenstand der Erfindung ist ein Verfahren zur Herstellung von Mischungen zyklischer verzweigter, ausschließlich D- und T-Einheiten aufweisender Siloxane, vorzugsweise gemäß einem der Ansprüche 1-5, umfassend
(a) eine sauer katalysierte Äquilibrierung von Trialkoxysilanen mit Siloxancyclen und/oder α,ω-Dihydroxy-polydimethylsiloxan in Anwesenheit von mindestens einem sauren Katalysator und danach
(b) eine durch Wasserzugabe eingeleitete Hydrolyse- und Kondensationsreaktion gefolgt von der Zugabe eines Silicium-haltigen Lösemittels,
(c) mit einer anschließenden destillativen Abtrennung des freigesetzten Alkohols und Anteilen des im System vorhandenen Wassers,
(d) mit anschließender Zugabe von Toluol und Auskreisen restlichen im Stoffsystem verbliebenen Wassers
(e) gefolgt von einer Neutralisation oder Abtrennung des sauren Katalysators und gegebenenfalls Abtrennung womöglich gebildeter Salze,
(f) mit abschließender destillativer Entfernung noch im System vorhandenen Toluols,
wobei das Silicium-haltige Lösungsmittel vorzugsweise die isomeren Siloxancyclen Oktamethylcyclotetrasiloxan (D₄), Dekamethylcyclopentasiloxan (D₅) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird. Dieses Verfahren ermöglicht insbesondere die Bereitstellung der Mischungen nach Anspruch 1.

Noch ein weiterer Gegenstand der Erfindung ist ein Verfahren zur Herstellung verzweigter, organomodifizierter Siloxane,
wobei in einem ersten Schritt zyklische-verzweigte Siloxane bereitgestellt werden, vorzugsweise Mischungen zyklischer-verzweigter, ausschließlich D- und T-Einheiten aufweisender Siloxane mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen kleiner 2 Molprozent, vorzugsweise kleiner 1,0 Molprozent ist, und weiterhin umfassend zumindest 5 Gew.% Siloxancyclen, wie vorzugsweise Oktamethylcyclotetrasiloxan (D₄), Dekamethylcyclopentasiloxan (D₅) und/oder deren Mischungen.
und wobei in einem zweiten Schritt die zyklischen-verzweigten Siloxane mit Silanen und/oder Siloxanen sauer äquilibriert werden.

Die Erfindung und ihre Gegenstände werden nachfolgend genauer erläutert.

Bei den erfindungsgemäßen Mischungen zyklischer-verzweigter, ausschließlich D- und T-Einheiten aufweisender Siloxane, wie im Hauptanspruch definiert, liegt im Rahmen einer bevorzugten Ausführungsform der Erfindung das Verhältnis von D- zu T-Einheiten zwischen 10 : 1 und 3 : 1, bevorzugt zwischen 6 : 1 und 4 : 1.

Gemäß einer weiteren bevorzugten Ausführungsform der Erfindung liegt das Molmassenverhältnis M_{w}/Mₙ der Mischung zyklischer-verzweigter, ausschließlich D- und T-Einheiten aufweisender Siloxane im Bereich 2 < M_{w}/Mₙ < 50. Diese Parameter können bestimmt werden aus toluolischen Lösungen der Siloxane durch die Gel-Permeations-Chromatographie (GPC), die unter Nutzung eines Brechungsindex-Detektors im Abgleich gegen einen Polystyrol-Standard die Bestimmung von deren mittleren Molmasse M_{w} und deren Molmassenverteilung M_{w}/Mₙ gestattet.

Wenn die Mischungen zyklisch verzweigter, ausschließlich D- und T-Einheiten aufweisender Siloxane, wie zuvor beschrieben, sich dadurch auszeichnen, dass sich die verzweigende T-Einheit von Alkyltrialkoxysilanen und/oder, vorzugsweise oder, Phenyltrialkoxysilanen herleitet, so liegt eine weitere bevorzugte Ausführungsform der Erfindung vor.

Ebenso liegt eine bevorzugte Ausführungsform der Erfindung vor, wenn sich die verzweigende T-Einheit von Methyltriethoxysilan herleitet.

Die Bereitstellung der vorgenannten erfindungsgemäßen Mischungen gelingt über das bereits genannte und auch in Anspruch 6 definierte Verfahren.

Das dabei einzusetzende Silicium-haltige Lösungsmittel umfasst vorzugsweise die isomeren Siloxancyclen Oktamethylcyclotetrasiloxan (D₄), Dekamethylcyclotpentasiloxan (D₅) und/oder deren Mischungen, und vorteilhafterweise wird in Massenverhältnissen von Silicium-haltigem Lösemittel zum Siloxan von 1:1 bis 5:1 gearbeitet. Dies entspricht einer bevorzugten Ausführungsform der Erfindung.

Gemäß einer weiteren bevorzugten Ausführungsform wird im Rahmen des erfindungsgemäßen Verfahrens als saurer Katalysator para-Toluolsulfonsäure, Trifluormethansulfonsäure, Trichloressigsäure, Schwefelsäure, Perchlorsäure, Phosphorsäure und/oder Hexafluorphosphorsäure eingesetzt, und zwar vorzugsweise in Mengen von 0,1 bis 2,0 Gewichtsprozent, besonders bevorzugt in Mengen von 0,15 bis 1,0 Gewichtsprozent, jeweils bezogen auf den Silicium enthaltenden Anteil der Reaktionsmatrix.

Gemäß einer weiteren bevorzugten Ausführungsform der Erfindung wird als saurer Katalysator ein sulfonsaures, makrovernetztes lonenaustauscherharz eingesetzt, vorzugsweise in Mengen von 1,0 bis 10,0 Gewichtsprozent, besonders bevorzugt in Mengen von 2,0 bis 6,0 Gewichtsprozent jeweils bezogen auf den Silicium enthaltenden Anteil der Reaktionsmatrix.

Wird die erfindungsgemäße Umsetzung bei Temperaturen im Bereich von 20°C bis 120°C, vorzugsweise von 40°C bis 110°C durchgeführt, so liegt eine weitere bevorzugte Ausführungsform der Erfindung vor.

Ebenfalls liegt eine weitere bevorzugte Ausführungsform der Erfindung vor, wenn ein mindestens 100%iger H₂O-Überschuss bezogen auf die zu kondensierenden Gruppen eingesetzt wird.

Ebenfalls liegt eine weitere bevorzugte Ausführungsform der Erfindung vor, wenn die Umsetzung einen Voräquilibrierschritt bei Temperaturen von T>40°C umfasst, gefolgt von einer durch Wasserzugabe eingeleiteten Kondensation bei Temperaturen von T>60°C, wobei die Wasserzugabe in einer Portion, in mehreren Portionen oder fortlaufend erfolgt.

Für das erfindungsgemäße Verfahren können prinzipiell alle Trialkoxysilane eingesetzt werden. Als Trialkoxysilane können insbesondere solche eingesetzt werden, bei denen die Alkoxyreste alle gleich, alle unterschiedlich oder teilweise gleich sind. Als Trialkoxysilane können insbesondere Triethoxysilane, vorzugsweise Methyltriethoxysilan, Alkyltriethoxysilane wie beispielsweise n-Propyltriethoxysilan, Isobutyltriethoxysilan, Pentyltriethoxysilan, Hexyltriethoxysilan, Octyltriethoxysilan, Hexadecyltriethoxysilan, n-Octadecyltriethoxysilan, halogenhaltige oder pseudohalogenhaltige Alkyltrialkoxysilane, insbesondere Alkyltriethoxysilane, wie beispielsweise Chlorpropyltriethoxysilan, Tridecafluoro-1, 1,2, 2-tetrahydrooctyltriethoxysilan, Nonafluoro-1, 1,2, 2-tetrahydrohexyltriethoxysilan, 3-Cyanopropyltriethoxysilan, Trialkoxysilane, insbesondere Triethoxysilane mit funktionellen Gruppen, wie beispielsweise 3-Methacryloxypropyltriethoxysilan, 3-Mercaptopropyltriethoxysilan, 5- (Bicycloheptenyl) triethoxysilan, Phenyltriethoxysilan, (p-Chloromethyl)phenyltriethoxysilan, N- (3-Triethoxysilylpropyl) -4, 5-dihydroimidazol oder Dihydro-3- [3- (triethoxysilyl)propyl] furan-2, 5-dion, eingesetzt werden. Es kann vorteilhaft sein, wenn organisch funktionalisierte Trialkoxysilane als Verzweigungseinheit eingesetzt werden (einäquilibriert werden).

Am Beispiel der vom Methyltriethoxysilan abgeleiteten D/T-Cyclen sei eine bevorzugte Verfahrensvariante nachfolgend beispielhaft beschrieben:
Vorteilhafterweise wird die Äquilibrierung von Methyltriethoxysilan ausschließlich mit Siloxancyclen und/oder α,ω Dihydroxypolydimethylsiloxan unter Zugabe einer katalytischen Menge von vorzugsweise Trifluormethansulfonsäure bei 60°C im Laufe von 2 bis 4 Stunden vorgenommen. Nach diesem Voräquilibrierschritt wird dann nach Zugabe eines vorzugsweise mindestens 100%igen stöchiometrischen Überschusses an Wasser die Kondensationsreaktion im Laufe von vorzugsweise 2 bis 4 Stunden bei vorzugsweise 80°C durchgeführt, danach wird dem System vorzugsweise erneut eine Portion Wasser hinzugefügt, um dann ein Silicium-enthaltendes Lösungsmittel, vorzugsweise einfache Siloxancyclen (D₄/ D₅), hinzuzugeben und das Abdestillieren von Ethanol-Wasser-Gemischen bis zum Erreichen einer Innentemperatur von 90°C durchzuführen. Man fügt dann dem Reaktionsansatz Toluol hinzu und destilliert bis zu einer Sumpftemperatur von 100°C vorzugsweise am Wasserabscheider das noch im Stoffsystem befindliche Wasser ab. Man lässt den Reaktionsansatz auf etwa 60°C abkühlen, neutralisiert die Säure beispielsweise durch Zugabe festen Natriumhydrogencarbonats und rührt dann zur vollständigen Neutralisation noch weitere 30 Minuten nach. Nach Abkühlen auf 25°C werden durch Filtration Salze wie beispielsweise Natriumtriflat abgetrennt. Bei 70°C und einem angelegten Hilfsvakuum von < 1mbar wird das als Lösungsmittel eingesetzte Toluol abdestilliert.

Die hier in das System eingetragene Wassermenge bemisst sich bevorzugt so, dass die über alle Schritte des erfindungsgemäßen Verfahrens eingesetzte Gesamtwassermenge einen stöchiometrischen Überschuss von 150% bis 500%, vorzugsweise 150 % bis 250% bezogen auf eingesetztes Methyltriethoxysilan abdeckt.

Die im erfindungsgemäßen Verfahren als Äquilibrierkatalysator bevorzugt verwendete Trifluormethan-sulfonsäure wird vorzugsweise in Mengen von 0,1 - 0,5 Gew.-%, bevorzugt in Mengen von 0,15 bis 0,3 Gew.-% bezogen auf die Masse aller Si-haltigen Reaktanden des Äquilibrieransatzes eingesetzt.

Ein entscheidender Vorteil des erfindungsgemäßen Herstellprozesses liegt darin, dass man die Synthese von zyklisch-verzweigten Siloxanen unter verschärften Reaktionsbedingungen wie etwa einer hohen Säurekonzentration und hohen Temperaturen ohne Produktschädigung durchführen kann, da keinerlei empfindliche Gruppierungen (wie z.B. SiH-Funktionen) zugegen sind. Hierdurch gelingt ein optimaler Einbau von Verzweigungseinheiten (T-Strukturen) in die molekularen Gerüste der Siloxanoligomeren, bei dem die T-Strukturen idealer Weise jeweils durch D-Einheiten getrennt und nicht domänenartig kumuliert vorliegen, was die ²⁹Si-NMR-Spektroskopie insbesondere im Verschiebungsbereich der T-Strukturen nahelegt.

Die dabei erfindungsgemäß bevorzugt einsetzbaren Silicium-haltigen Lösemittel umfassen die einfachen, flüssigen Dimethylsiloxanzyklen wie Oktamethylcyclotetrasiloxan (D₄) und Dekamethylcyclopentasiloxan (D₅) sowie deren Gemische. Besonders bevorzugt ist Dekamethylcyclopentasiloxan (D₅).

Das Silicium-haltige Lösemittel, insbesondere umfassend die genannten einfachen Siloxanzyklen , wird, wie oben bereits beschrieben, nach Hinzufügen von Toluol und im Zuge des Abdestillierens eines Toluol/ Wasser-Gemisches, anteilsweise in die ausschließlich D- und T-Einheiten aufweisenden Siloxane eingebaut.

Der erfindungsgemäß eingesetzte saure Katalysator ist vor der abschließenden destillativen Entfernung des noch im System vorhandenen Toluols wahlweise durch eine Neutralisation, bei der ggf. gebildete Salze abzutrennen sind, oder eine einfache Abtrennung aus dem Stoffsystem zu entfernen (z.B. bei Verwendung sulfonsaurer, makrovernetzter lonenaustauscherharze). Zur Neutralisation eignet sich eine Vielzahl an Basen.

Wie in den Beispielen 1 und 2 gezeigt ist bereits Natriumhydrogencarbonat eine probate Base zur Neutralisation der im Stoffsystem vorhandenen, erfindungsgemäß bevorzugt eingesetzten Trifluormethansulfonsäure.

Prinzipiell können auch andere Basen, wie zum Beispiel organische Amine zur Neutralisation der im System vorhandenen Trifluormethansulfonsäure eingesetzt werden. Insbesondere unter dem Aspekt betrieblicher Produktion kann man auch gasförmigen Ammoniak einsetzen.

Nach abschließender destillativer Entfernung des noch im System vorhandenen Toluols können Mischungen zyklisch-verzweigter Siloxane in nahezu quantitativen Ausbeuten isoliert werden, die klare, farblose, niedrig-viskose Flüssigkeiten darstellen und deren zugehöriges ²⁹Si-NMR-Spektrum die dominierende Präsenz von D- und T-Einheiten belegt. Die ²⁹Si-NMR-spektroskopisch bestimmten summarischen Gehalte an D- und T-Einheiten, die Si-Alkoxy- beziehungsweise SiOH-Gruppen aufweisen sind bei den nach dem erfindungsgemäßen Verfahren erhaltenen zyklisch-verzweigten Siloxane vom D/T-Typ kleiner 2 Molprozent, vorzugsweise kleiner 1,0 Molprozent bezogen auf die spektroskopisch erfasste Gesamtheit an Silizium. Die resultierenden Mischungen umfassen gewöhnlich zumindest 5 Gew.-% Siloxancyclen, wie vorzugsweise Oktamethylcyclotetrasiloxan (D₄), Dekamethylcyclopentasiloxan (D₅) und/oder deren Mischungen.

Ein erfindungsgemäßes Verfahren, wie zuvor beschrieben, bei dem die Mischungen zyklischer-verzweigter Siloxane mit Silanen und/oder Siloxanen in Gegenwart eines sauren Katalysators vorzugsweise Trifluormethansulfonsäure, vorzugsweise in einer Menge von ≥ 0,1 Gew.-% äquilibriert werden, ist besonders bevorzugt.

Eine weitere erfindungsgemäß bevorzugte Ausführungsform des beanspruchten Verfahrens ergibt sich aus der Verwendung eines wasserhaltigen, sulfonsauren, makroporösen Polystyrolharzes, zum Beispiel eines mit 10 Gew.-% Wasser behafteten Lewatit^{®} K 2621 zur Äquilibrierung.

Ein erfindungsgemäßes Verfahren, wie zuvor beschrieben, bei dem die Mischungen zyklischer-verzweigter Siloxane mit Silanen und/oder Siloxanen sauer äquilibriert werden und die Äquilibrierung an einem wasserhaltigen, sulfonsauren, makroporösen Polystyrolharz vorgenommen wird, das vorzugsweise in Mengen von 3 bis 9 Gew.-% bezogen auf die zu äquilibrierende Mischung, eingesetzt wird und vorzugsweise mit 8 bis 12 Gew.-% Wasser behaftet ist und dessen spezifische Oberfläche vorzugsweise ≥ 35 m²/g und dessen mittlerer Porendurchmesser vorzugsweise wenigstens 65 nm beträgt, entspricht einer besonders bevorzugten Ausführungsform der Erfindung.

Ein besonders bevorzugtes sulfonsaures Kationenaustauscherharz ist beispielsweise Lewatit^{®} K 2621.

Zur Erzielung der finalen Siloxanstruktur, also zur Bereitstellung verzweigter, organomodifizierter Siloxane, wird eine saure Äquilibrierung mit Silanen, vorzugsweise funktionellen Silanen, und/ oder Siloxanen durchgeführt.

Dies entspricht dem erfindungsgemäßen Verfahren zur Herstellung verzweigter, organomodifizierter Siloxane, wobei
in einem ersten Schritt Mischungen zyklischer-verzweigter Siloxane bereitgestellt werden, vorzugsweise wie zuvor im Detail beschrieben, insbesondere gemäß einem der Ansprüche 1 bis 11,
   und
in einem zweiten Schritt die Mischungen zyklischer-verzweigter Siloxane mit Silanen und/oder Siloxanen sauer äquilibriert werden.

Als Silane und/oder Siloxane können alle sauer äquilibrierbaren Siliciumverbindungen eingesetzt werden. Funktionelle Silane und/oder Siloxane sind bevorzugt.

Unter funktionellem Silan bzw. Siloxan werden in diesem Zusammenhang alle diejenigen ein und/ oder mehrere Siliziumatome umfassenden Verbindungen verstanden, die auf dem Wege der sauren Äquilibrierung in das Copolymer eingebaut werden können. Insbesondere weisen diese sauer äquilibrierbaren Silane bzw. Siloxane neben gegebenenfalls vorhandenen Wasserstoff-, Alkyl- bzw. Aryl- oder Vinylsubstituenten auch noch Hydroxy-, Alkoxy- und Chlor- Substituenten auf. Ebenfalls eignen sich funktionelle Silane bzw. Siloxane, die saure Gruppierungen wie zum Beispiel Toluolsulfonat-, Trifluormethylsulfonat- und Sulfat-Reste tragen.

Als Silane können insbesondere Diethoxydimethylsilan, Trimethylalkoxysilane und/oder Dimethyldichlorsilan eingesetzt werden.

Als Siloxane können insbesondere Tetramethyldisiloxan, α,ω-Dihydrogen-polydimethylsiloxane, Poly(methylhydrogen)siloxane, α,ω-Dialkoxypolydimethylsiloxane und/oder α,ω-Divinylpoly-dimethylsiloxane eingesetzt werden.

Als Sonderfall werden durch das saure Co-Äquilibrieren des im ersten Schritt gewonnenen zyklisch-verzweigten Siloxans vom D/T-Typ mit Hexamethyldisiloxan und/ oder Polydimethylsiloxanen verzweigte Siliconöle zugänglich.

Dies entspricht dem erfindungsgemäßen Verfahren zur Herstellung verzweigter Silikonöle, wobei in einem ersten Schritt zyklische-verzweigte Siloxane bereitgestellt werden, vorzugsweise wie in einem der Ansprüche 1-11 festgelegt,
und in einem zweiten Schritt die zyklischen-verzweigten Siloxane mit Polydimethylsiloxanen oder Hexamethyldisiloxan umgesetzt werden.

Als saure Katalysatoren eignen sich die nach dem Stand der Technik bekannten starken Säuren (Äquilibriersäuren) für Siloxane, also Mineralsäuren, wie beispielsweise Schwefelsäure, aber auch Sulfonsäuren, Fluoralkylsulfonsäuren wie zum Beispiel Trifluormethansulfonsäure, saure Tonerden oder saure lonenaustauscherharze, wie beispielsweise die unter den Markennamen Amberlite^{®}, Amberlyst^{®} oder Dowex^{®} und Lewatit^{®} bekannten Produkte .

In dem erfindungsgemäßen Verfahren können sowohl natürliche Ionenaustauscher, wie beispielsweise Zeolithe, Montmorillonite, Attapulgite, Bentonite und andere Alumosilikate sowie synthetische Ionenaustauscher eingesetzt werden. Letztere sind vorzugsweise Festkörper (meist in Körnerform) mit einer dreidimensionalen, wasserunlöslichen hochmolekularen Matrix auf der Basis von Phenol-Formaldehyd-Harzen oder Copolymerisate aus Styrol-Divinylbenzol, in die zahlreiche "Ankergruppen" unterschiedlicher Acidität eingebaut sind.

Als saure Ionenaustauscher können unter anderem solche vorteilhaft eingesetzt werden, wie sie in der EP 1439200 B1 beschrieben sind.

Bevorzugt werden sulfonsaure Katalysatoren und ganz besonders bevorzugt Trifluormethan-sulfonsäure eingesetzt.

Die gaschromatographische Analyse zeigt, dass in den Äquilibraten typischerweise einfache Siloxancyclen wie D₄ (Oktamethylcyclotetrasiloxan), D₅ (Dekamethylcyclopentasiloxan) und D₆ (Dodekamethylcyclohexasiloxan) nur in Gewichtsanteilen von kleiner 10% zugegen sind.

Falls für die spätere jeweilige Anwendung gewünscht (zum Beispiel im Rahmen der VOC-Diskussion (VOC = Volatile Organic Compounds) oder des Anti-Foggings), können diese Siloxancyclen durch einfache Destillation abgetrennt und rezykliert werden.

Dem Fachmann ohne Weiteres verständlich, eignen sich die aus dem zweiten Schritt durch saure Äquilibrierung gewonnenen verzweigten, organomodifizierten Siloxane als Ausgangsmaterial zur Herstellung von Stabilisatoren für PUR-Schäume, zur Herstellung von Entschäumern, zur Herstellung von Lackadditiven, zur Herstellung von Emulgatoren, insbesondere von kosmetischen Emulgatoren, zur Herstellung kosmetischer Conditioner, zur Herstellung von Entlüftern, zur Herstellung von Dismulgatoren, zur Herstellung von Textilausrüstungsmitteln, zur Herstellung von Bautenschutzadditiven, zur Herstellung von Kunststoffadditiven, insbesondere Anti-Scratch-Additiven,zur Herstellung von Antifouling-Additiven bzw. -Beschichtungen und zur Herstellung von Anti-Icing-Beschichtungen. Die demgemäße Verwendung ist ein weiterer Gegenstand der vorliegenden Erfindung.

In Abhängigkeit von der im zweiten Schritt eingebauten Funktionalität (z.B. SiH-Gruppe) oder SiCl-Gruppe werden für alle diese vorgenannten Anwendungen nach Auswahl geeigneter Reaktionspartner SiCverknüpfte Finalprodukte via Hydrosilylierung, oder aber SiOC-verknüpfte Finalprodukte via dehydrogenativer SiOC-Verknüpfung oder Kondensation nach den bekannten Verfahren der Siliconechemie zugänglich.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externen Standard [δ(²⁹Si) = 0,0 ppm] gemessen.

Die Bestimmung der gewichtsmittleren Molmasse M_{w} und der Molmassenverteilung M_{w}/ Mₙ erfolgt im Rahmen dieser Erfindung an einem EcoSEC GPC/SEC-Gerät der Firma TOSOH Bioscience GmbH durch Gel-Permeations-Chromatographie aus toluolischen Lösungen der Siloxane. Verwendet wird eine Micro SDV 1000/10000-Säule von 55,00 cm Länge kombiniert mit einem EcoSEC RI-Detektor (dual flow refractive index detection). Der Polystyrol-Standard deckt den Molmassenbereich von 162 g/mol bis 2520000 g/mol ab.

### Beispiele

### 1) Herstellung eines zyklisch-verzweigten Siloxans mit einem angestrebten D-/ T-Verhältnis von 6 : 1 (erfindungsgemäß)

In einem 500-ml-Vierhalsrundkolben mit KPG-Rührer und aufgesetztem Rückflusskühler wurden 52,2 g (0,293mol) Methyltriethoxysilan zusammen mit 65,3 g (0,176 mol) Dekamethylcyclopentasiloxan unter Rühren auf 60°C erwärmt, mit 0,400 g Trifluormethansulfonsäure beaufschlagt und für 4 Stunden äquilibriert. Dann wurden 15,8 g Wasser sowie 4,0 g Ethanol hinzugefügt und der Ansatz wurde für weitere 2 Stunden auf Rückflusstemperatur erhitzt. Man fügte 10,6 g Wasser sowie 65,3 g (0,176 mol) Dekamethylcyclopentasiloxan (D₅) hinzu und tauschte den Rückflusskühler gegen eine Destillationsbrücke aus und destillierte innerhalb der folgenden Stunde die bis 90°C flüchtigen Bestandteile ab. Die gaschromatographische Analyse (GC) zeigte, dass das Destillat aus Ethanol/ Wasser besteht. Man fügte dann dem Reaktionsansatz 200 ml Toluol hinzu und destillierte bis zu einer Sumpftemperatur von 100°C am Wasserabscheider das noch im Stoffsystem befindliche Wasser ab. Man ließ den Reaktionsansatz auf etwa 60°C abkühlen, neutralisierte die Säure durch Zugabe von 8,0 g festen Natriumhydrogencarbonats und rührte dann zur vollständigen Neutralisation noch weitere 30 Minuten nach. Nach Abkühlen auf 25°C wurden mit Hilfe eines Faltenfilters die Salze abgetrennt.

Bei 70°C und einem angelegten Hilfsvakuum von < 1mbar wurde das als Lösungsmittel eingesetzte Toluol abdestilliert. Die gaschromatographische Analyse (GC) belegte, dass das Destillat zu über 98% aus Toluol besteht. Der Destillationssumpf war eine farblose, leichtbewegliche Flüssigkeit deren ²⁹Si-NMR-Spektrum ein D-/T-Verhältnis von 5,6 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen tragen, ein Anteil von 0,44 Molprozent zu. Die gaschromatographische Analyse der Flüssigkeit weist außerdem einen Anteil von ca. 15 Gewichtsprozent an einfachen Siloxancyclen in Form von D₄, D₅ und D₆ nach.

### 2) Herstellung eines zyklisch-verzweigten Siloxans mit einem angestrebten D-/ T-Verhältnis von 6 : 1 (erfindungsgemäß)

In einem 10-I-Vierhalsrundkolben mit KPG-Rührer und aufgesetztem Rückflusskühler wurden 783 g (4,39 mol) Methyltriethoxysilan zusammen mit 978,7 g (2,64 mol) Dekamethylcyclopentasiloxan unter Rühren auf 60°C erwärmt, mit 2,98 g Trifluormethansulfonsäure beaufschlagt und für 4 Stunden äquilibriert. Dann wurden 237 g Wasser sowie 59,3 g Ethanol hinzugefügt und der Ansatz für weitere 2 Stunden auf Rückflusstemperatur erhitzt. Man fügte 159,0 g Wasser sowie 978,8 g (2,64 mol) Dekamethylcyclopentasiloxan (D₅) hinzu und tauschte den Rückflusskühler gegen eine Destillationsbrücke aus und destillierte innerhalb der folgenden Stunde die bis 90°C flüchtigen Bestandteile ab. Man fügte dann dem Reaktionsansatz 3000 ml Toluol hinzu und destillierte bis zu einer Sumpftemperatur von 100°C am Wasserabscheider das noch im Stoffsystem befindliche Wasser ab. Man ließ den Reaktionsansatz auf etwa 60°C abkühlen, neutralisierte die Säure durch Zugabe von 60,0 g festen Natriumhydrogencarbonats und rührte dann zur vollständigen Neutralisation noch weitere 30 Minuten nach. Nach Abkühlen auf 25°C wurden mit Hilfe eines Faltenfilters die Salze abgetrennt.

Bei 70°C und einem angelegten Hilfsvakuum von < 1mbar wurde das als Lösungsmittel eingesetzte Toluol abdestilliert. Der Destillationssumpf war eine farblose, leichtbewegliche Flüssigkeit deren ²⁹Si-NMR-Spektrum ein D-/T-Verhältnis von 5,2 : 1 (angestrebt 6,0 : 1) zuweist. Bezogen auf die Summe der spektroskopisch erfassten Si-Einheiten kommt den D- und T-Einheiten, die Si-Alkoxybeziehungsweise SiOH-Gruppen ein Anteil von 0,43 Molprozent zu. Die gaschromatographische Analyse der Flüssigkeit weist außerdem einen Anteil von ca. 15 Gewichtsprozent an einfachen Siloxancyclen in Form von D₄, D₅ und D₆ nach. Das GPC weist eine breite Molmassenverteilung auf, gekennzeichnet durch M_{w} = 55258 g/ mol; Mₙ 1693 g/ mol und M_{w}/ Mₙ = 32,63.

### 3) Herstellung eines verzweigten, terminale SiH-Funktionen aufweisenden Wasserstoffsiloxans aus dem zyklisch-verzweigten Siloxan aus Beispiel 2 mit α,ω-Dihydrogenpolydimethylsiloxan und Dekamethylcyclopentasiloxan (erfindungsgemäß)

23,2 g des in Beispiel 2 hergestellten Produktes, d.h. des zyklisch verzweigten Siloxans sowie der einfachen Siloxancyclen, wurden zusammen mit 26,7 g eines α,ω-Dihydrogenpolydimethylsiloxans (SiH-Wert: 2,90 Val/kg) und 200,1 g Dekamethylcyclopentasiloxan unter Zufügen von 0,25 g Trifluormethansulfonsäure (0,1 m-% bezogen auf den Gesamtansatz) in einem 500-ml-Vierhalskolben mit KPG-Rührer und aufgesetztem Rückflusskühler für 6 Stunden auf 40°C erhitzt und dann mit 5 g Natriumhydrogencarbonat versetzt und 30 Minuten nachgerührt. Man trennte mit Hilfe einer Filterpresse (Seitz K 300-Filterscheibe) das Salz vom Äquilibrat ab.

Erhalten wurde ein farbloses verzweigtes Wasserstoffsiloxan mit Dimethylhydrogensiloxy-Funktionen in seinen Termini (SiH-Wert: 0,30 Val/kg) und einer Viskosität von 150 mPas (25°C, Höppler-Viskosimeter). Das zugehörige ²⁹Si-NMR-Spektrum belegt die Zielstruktur.

### 4) Herstellung eines verzweigten, terminale Vinyl-Funktionen aufweisenden Siloxans (erfindungsgemäß)

97,6 g des in Beispiel 2 hergestellten Produktes wurden zusammen mit 47,2 g Divinyltetramethyldisiloxan und 105,2 g Dekamethylcyclopentasiloxan unter Zufügen von 0,25 g Trifluormethansulfonsäure (0,1 m-% bezogen auf den Gesamtansatz) in einem 500-ml-Vierhalskolben mit KPG-Rührer und aufgesetztem Rückflusskühler für 6 Stunden auf 60°C erhitzt und dann mit 5 g Natriumhydrogencarbonat versetzt und 30 Minuten nachgerührt. Man trennte mit Hilfe einer Filterpresse (Seitz K 300-Filterscheibe) das Salz vom Äquilibrat ab.

Das zugehörige ²⁹Si-NMR-Spektrum sichert als Zielstruktur ein verzweigtes, terminale Vinylfunktionen tragendes Siloxan.

## Patentansprüche

1. Mischungen zyklischer-verzweigter, ausschließlich D- und T-Einheiten aufweisender Siloxane mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und weiterhin umfassend zumindest 5 Gew.-% Siloxancyclen, wie vorzugsweise Oktamethylcyclotetrasiloxan (D₄), Dekamethylcyclopentasiloxan (D₅), *Dodekamethylcyclohexasiloxan* (D₆) und/oder deren Mischungen.

2. Mischungen gemäß Anspruch 1, wobei das Verhältnis von D- zu T-Einheiten zwischen 10 : 1 und 3 : 1, bevorzugt zwischen 6 : 1 und 4 : 1 liegt.

3. Mischungen gemäß Anspruch 1 oder 2, wobei das Molmassenverhältnis der Mischung M_{w}/Mₙ im Bereich 2 < M_{w}/Mₙ < 50 liegt, wobei M_{w}/Mₙ gemäss der in der Beschreibung angegebenen Methode bestimmt wird.

4. Mischungen gemäß einem der Ansprüche 1 bis 3, wobei sich die verzweigende T-Einheit von Alkyltrialkoxysilanen und/oder Phenyltrialkoxysilanen herleitet.

5. Mischungen gemäß einem der Ansprüche 1 bis 4, wobei sich die verzweigende T-Einheit von Methyltriethoxysilan herleitet.

6. Verfahren zur Herstellung von Siloxan-Mischungen gemäß einem der Ansprüche 1 bis 5 umfassend
(a) eine sauer katalysierte Äquilibrierung von Trialkoxysilanen mit Siloxancyclen und/oder
α,ω-Dihydroxy-polydimethylsiloxan in Anwesenheit von mindestens einem sauren Katalysator und danach
(b) eine durch Wasserzugabe eingeleitete Hydrolyse- und Kondensationsreaktion gefolgt von der Zugabe eines Silicium-haltigen Lösemittels,
(c) mit einer anschließenden destillativen Abtrennung des freigesetzten Alkohols und Anteilen des im System vorhandenen Wassers,
(d) mit anschließender Zugabe von Toluol und Auskreisen restlichen im Stoffsystem verbliebenen Wassers,
(e) gefolgt von einer Neutralisation oder Abtrennung des sauren Katalysators und gegebenenfalls Abtrennung womöglich gebildeter Salze,
(f) mit abschließender destillativer Entfernung noch im System vorhandenen Toluols,
wobei das Silicium-haltige Lösungsmittel die isomeren Siloxancyclen Oktamethylcyclotetrasiloxan (D₄), Dekamethylcyclopentasiloxan (D₅) und/oder deren
Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

7. Verfahren nach Anspruch 6, **dadurch gekennzeichnet, dass** als saurer Katalysator para-Toluolsulfonsäure, Trifluormethansulfonsäure, Trichloressigsäure, Schwefelsäure, Perchlorsäure, Phosphorsäure und/oder Hexafluorphosphorsäure eingesetzt werden, vorzugsweise in Mengen von 0,1 bis 2,0 Gewichtsprozent, besonders bevorzugt in Mengen von 0,15 bis 1,0 Gewichtsprozent, jeweils bezogen auf den Silicium enthaltenden Anteil der Reaktionsmatrix.

8. Verfahren nach Anspruch 6, **dadurch gekennzeichnet, dass** als saurer Katalysator ein sulfonsaures, makrovernetztes lonenaustauscherharz eingesetzt wird, vorzugsweise in Mengen von 1,0 bis 10,0 Gewichtsprozent, besonders bevorzugt in Mengen von 2,0 bis 6,0 Gewichtsprozent jeweils bezogen auf den Silicium enthaltenden Anteil der Reaktionsmatrix.

9. Verfahren nach einem der Ansprüche 6 oder 7, **dadurch gekennzeichnet, dass** die Umsetzung bei Temperaturen im Bereich von 20°C bis 120°C, vorzugsweise von 40°C bis 110°C durchgeführt wird.

10. Verfahren nach einem der Ansprüche 6 bis 9, **dadurch gekennzeichnet, dass** ein mindestens 100%-iger H₂O-Überschuss bezogen auf die zu kondensierenden Gruppen eingesetzt wird.

11. Verfahren nach einem der Ansprüche 6 bis 10, **dadurch gekennzeichnet, dass** die Umsetzung einen Voräquilibrierschritt bei Temperaturen von T>40°C umfasst, gefolgt von einer durch Wasserzugabe eingeleiteten Kondensation bei Temperaturen von T>60°C, wobei die Wasserzugabe in einer Portion, in mehreren Portionen oder fortlaufend erfolgt.

12. Verfahren zur Herstellung verzweigter, organomodifizierter Siloxane, **dadurch gekennzeichnet, dass**
in einem ersten Schritt Mischungen zyklischer-verzweigter Siloxane bereitgestellt werden, gemäß einem der Ansprüche 1 bis 5,
und
in einem zweiten Schritt die Mischungen zyklischer-verzweigter Siloxane mit Silanen und/oder Siloxanen sauer äquilibriert werden.

13. Verfahren nach Anspruch 12, **dadurch gekennzeichnet, dass** als Silane und/oder Siloxane sauer äquilibrierbare Siliciumverbindungen eingesetzt werden,
wobei als Silane vorzugsweise Diethoxydimethylsilan, Trimethylalkoxysilane und/oder Dimethyldichlorsilan eingesetzt werden, und/oder
wobei als Siloxane vorzugsweise Tetramethyldisiloxan, α,ω-Dihydrogen-polydimethylsiloxane, Poly(methylhydrogen)siloxane, α,ω-Dialkoxypolydimethylsiloxane und/oder α,ω-Divinylpoly-dimethylsiloxane eingesetzt werden.

14. Verfahren nach Anspruch 12 oder 13, **dadurch gekennzeichnet, dass** in dem zweiten Schritt, die Mischungen zyklischer-verzweigter Siloxane mit Silanen und/oder Siloxanen in Gegenwart eines sauren Katalysators, vorzugsweise Trifluormethansulfonsäure, vorzugsweise in einer Menge von ≥ 0,1 Gew.-% äquilibriert werden.

15. Verfahren nach Anspruch 12 oder 13, **dadurch gekennzeichnet, dass** in dem zweiten Schritt, in welchem die Mischungen zyklischer-verzweigter Siloxane mit Silanen und/oder Siloxanen sauer äquilibriert werden, die Äquilibrierung an einem wasserhaltigen, sulfonsauren, makroporösen Polystyrolharz vorgenommen wird, das vorzugsweise in Mengen von 3 bis 9 Gew.-% eingesetzt wird, und das vorzugsweise mit 8 bis 12 Gew.% Wasser behaftet ist, und dessen spezifische Oberfläche vorzugsweise ≥ 35 m²/g und dessen mittlerer Porendurchmesser vorzugsweise wenigstens 65 nm beträgt.

16. Verfahren zur Herstellung verzweigter Silikonöle, **dadurch gekennzeichnet, dass** in einem ersten Schritt zyklische-verzweigte Siloxane bereitgestellt werden, gemäß einem der Ansprüche 1 bis 5, und in einem zweiten Schritt die zyklischen-verzweigten Siloxane mit Polydimethylsiloxanen oder Hexamethyldisiloxan umgesetzt werden.

17. Verwendung der durch saure Äquilibrierung gewonnenen verzweigten, organomodifizierten Siloxane, erhältlich nach einem der Ansprüche 12-15, als Ausgangsmaterial zur Herstellung von Stabilisatoren für PUR-Schäume, zur Herstellung von Entschäumern, zur Herstellung von Lackadditiven, zur Herstellung von Emulgatoren, insbesondere von kosmetischen Emulgatoren, zur Herstellung kosmetischer Conditioner, zur Herstellung von Entlüftern, zur Herstellung von Dismulgatoren, zur Herstellung von Textilausrüstungsmitteln, zur Herstellung von Bautenschutzadditiven, zur Herstellung von Kunststoffadditiven, insbesondere Anti-Scratch-Additiven,zur Herstellung von Antifouling-Additiven bzw. -Beschichtungen und zur Herstellung von Anti-Icing-Beschichtungen.

## Claims

1. Mixtures of cyclic branched siloxanes having exclusively D and T units, with the proviso that the cumulative proportion of the D and T units having Si-alkoxy and/or SiOH groups that are present in the siloxane matrix, determinable by ²⁹Si NMR spectroscopy, is less than 2 mole per cent, preferably less than 1 mole per cent, and further comprising at least 5% by weight of siloxane cycles, such as preferably octamethylcyclotetrasiloxane (D₄), decamethylcyclopentasiloxane (D₅), dodecamethylcyclohexasiloxane (D₆) and/or mixtures thereof.

2. Mixtures according to Claim 1, wherein the ratio of D to T units is between 10:1 and 3:1, preferably between 6:1 and 4:1.

3. Mixtures according to Claim 1 or 2, wherein the molar mass ratio of the mixture M_{w}/Mₙ is in the range of 2 < M_{w}/Mₙ < 50, where M_{w}/Mₙ is determined by the method specified in the description.

4. Mixtures according to any of Claims 1 to 3, wherein the branching T unit derives from alkyltrialkoxysilanes and/or phenyltrialkoxysilanes.

5. Mixtures according to any of Claims 1 to 4, wherein the branching T unit derives from methyltriethoxysilane.

6. Process for preparing siloxane mixtures according to any of Claims 1 to 5, comprising
(a) an acid-catalysed equilibration of trialkoxysilanes with siloxane cycles and/or α,ω-dihydroxypolydimethylsiloxane in the presence of at least one acidic catalyst and then
(b) a hydrolysis and condensation reaction initiated by addition of water, followed by the addition of a silicon-containing solvent,
(c) with a subsequent distillative removal of the alcohol released and proportions of the water present in the system,
(d) with subsequent addition of toluene and separation of residual water remaining in the system,
(e) followed by a neutralization or removal of the acidic catalyst and, if appropriate, removal of any salts formed,
(f) with final distillative removal of toluene still present in the system,
wherein the silicon-containing solvent preferably comprises the isomeric siloxane cycles octamethylcyclotetrasiloxane (D₄), decamethylcyclopentasiloxane (D₅) and/or mixtures thereof, and mass ratios of silicon-containing solvent to the siloxane having D and T units of 1:1 to 5:1 are advantageously employed.

7. Process according to Claim 6, **characterized in that** the acidic catalyst used is para-toluenesulfonic acid, trifluoromethanesulfonic acid, trichloroacetic acid, sulfuric acid, perchloric acid, phosphoric acid and/or hexafluorophosphoric acid, preferably in amounts of 0.1 to 2.0 per cent by weight, more preferably in amounts of 0.15 to 1.0 per cent by weight, based in each case on the silicon-containing component of the reaction matrix.

8. Process according to Claim 6, **characterized in that** the acidic catalyst used is a macrocrosslinked sulfonic acid ion exchange resin, preferably in amounts of 1.0 to 10.0 per cent by weight, more preferably in amounts of 2.0 to 6.0 per cent by weight, based in each case on the silicon-containing component of the reaction matrix.

9. Process according to either of Claims 6 and 7, **characterized in that** the reaction is conducted at temperatures in the range from 20°C to 120°C, preferably from 40°C to 110°C.

10. Process according to any of Claims 6 to 9, **characterized in that** an at least 100% H₂O excess is used, based on the groups to be condensed.

11. Process according to any of Claims 6 to 10, **characterized in that** the reaction comprises a preliminary equilibration step at temperatures of T > 40°C, followed by a condensation initiated by addition of water at temperatures of T > 60°C, where the water is added in one portion, in several portions or continuously.

12. Process for preparing branched organomodified siloxanes, **characterized in that**
in a first step mixtures of cyclic branched siloxanes are provided, preferably according to any of Claims 1 to 5,
and
in a second step the mixtures of cyclic branched siloxanes are acid-equilibrated with silanes and/or siloxanes.

13. Process according to Claim 12, **characterized in that** the silanes and/or siloxanes used are acid-equilibratable silicon compounds,
wherein the silanes used are preferably diethoxydimethylsilane, trimethylalkoxysilanes and/or dimethyldichlorosilane,
and/or
wherein the siloxanes used are preferably tetramethyldisiloxane, α,ω-dihydropolydimethyl-siloxanes, poly(methylhydro)siloxanes, α,ω-dialkoxypolydimethylsiloxanes and/or α,ω-divinylpolydimethylsiloxanes.

14. Process according to Claim 12 or 13, **characterized in that**, in the second step, the mixtures of cyclic branched siloxanes are equilibrated with silanes and/or siloxanes in the presence of an acidic catalyst, preferably trifluoromethanesulfonic acid, preferably in an amount of ≥ 0.1% by weight.

15. Process according to Claim 12 or 13, **characterized in that**, in the second step in which the mixtures of cyclic branched siloxanes are acid-equilibrated with silanes and/or siloxanes, the equilibration is undertaken over a water-containing macroporous sulfonic acid polystyrene resin, which is preferably used in amounts of 3% to 9% by weight and which has preferably been wetted with 8% to 12% by weight of water, and the specific surface area of which is preferably ≥ 35 m²/g and the mean pore diameter of which is preferably at least 65 nm.

16. Process for preparing branched silicone oils, **characterized in that** in a first step cyclic branched siloxanes are provided, according to any of Claims 1 to 5,
and in a second step the cyclic branched siloxanes are reacted with polydimethylsiloxanes or hexamethyldisiloxane.

17. Use of the branched organomodified siloxanes recovered by acidic equilibration, obtainable according to any of Claims 12 to 15, as starting material for production of stabilizers for PUR foams, for production of defoamers, for production of paint additives, for production of emulsifiers, especially of cosmetic emulsifiers, for production of cosmetic conditioners, for production of deaerating agents, for production of demulsifiers, for production of textile finishes, for production of building protection additives, for production of polymer additives, especially anti-scratch additives, for production of antifouling additives or coatings and for production of anti-icing coatings.

## Revendications

1. Mélanges de siloxanes cycliques-ramifiés, présentant exclusivement des motifs D et T, à la condition que la proportion en somme déterminable par spectroscopie de RMN ²⁹Si des motifs D et T présents dans la matrice de siloxane, qui présentent des groupes Si-alcoxy et/ou des groupes SiOH, est inférieure à 2 pour cent en moles, préférablement inférieure à 1 pour cent en moles, et en outre comprenant au moins 5 % en poids de cycles de siloxane, comme de préférence l'octaméthylcyclotétrasiloxane (D₄), le décaméthylcyclopentasiloxane (D₅), le dodécaméthylcyclohexasiloxane (D₆) et/ou leurs mélanges.

2. Mélanges selon la revendication 1, le rapport des motifs D sur T se situant entre 10 : 1 et 3 : 1, préférablement entre 6 : 1 et 4 : 1.

3. Mélanges selon la revendication 1 ou 2, le rapport de masses molaires du mélange M_{w}/Mₙ se situant dans la plage de 2 < M_{w}/Mₙ < 50, M_{w}/Mₙ étant déterminé selon la méthode indiquée dans la description.

4. Mélanges selon l'une quelconque des revendications 1 à 3, le motif T ramifiant étant issu d'alkyltrialcoxysilanes et/ou de phényltrialcoxysilanes.

5. Mélanges selon l'une quelconque des revendications 1 à 4, le motif T ramifiant étant issu de méthyltriéthoxysilane.

6. Procédé pour la préparation de mélanges de siloxanes selon l'une quelconque des revendications 1 à 5 comprenant
(a) un équilibrage catalysé de manière acide de trialcoxysilanes avec des siloxanes cycliques et/ou un α,ω-dihydroxy-polydiméthylsiloxane en présence d'au moins un catalyseur acide et ensuite
(b) une réaction d'hydrolyse et de condensation initiée par l'ajout d'eau suivie par l'ajout d'un solvant contenant du silicium,
(c) avec une séparation ultérieure par distillation de l'alcool libéré et des parties de l'eau présente dans le système,
(d) avec ajout ultérieur de toluène et circulation de l'eau restante restée dans le système de substance,
(e) suivi par une neutralisation ou une séparation du catalyseur acide et éventuellement une séparation de sels éventuellement formés,
(f) avec une élimination ultérieure par distillation de toluène encore présent dans le système,
le solvant contenant du silicium comprenant les siloxanes cycliques isomériques, l'octaméthylcyclotétrasiloxane (D₄), le décaméthylcyclopentasiloxane (D₅) et/ou leurs mélanges, et on travaille avantageusement dans des rapports en masse de solvant contenant du silicium sur siloxane présentant des motifs D et T de 1 : 1 à 5 : 1.

7. Procédé selon la revendication 6, **caractérisé en ce que** de l'acide para-toluènesulfonique, de l'acide trifluorométhanesulfonique, de l'acide trichloroacétique, de l'acide sulfurique, de l'acide perchlorique, de l'acide phosphorique et/ou de l'acide hexafluorophosphorique sont utilisés en tant que catalyseur acide, de préférence en des quantités de 0,1 à 2,0 pour cent en poids, particulièrement préférablement en des quantités de 0,15 à 1,0 pour cent en poids, à chaque fois par rapport à la partie contenant du silicium de la matrice de réaction.

8. Procédé selon la revendication 6, **caractérisé en ce qu'**une résine échangeuse d'ions, à acide sulfonique, macroréticulée est utilisée en tant que catalyseur acide, de préférence en des quantités de 1,0 à 10,0 pour cent en poids, particulièrement préférablement en des quantités de 2,0 à 6,0 pour cent en poids, à chaque fois par rapport à la partie contenant du silicium de la matrice de réaction.

9. Procédé selon l'une quelconque des revendications 6 et 7, **caractérisé en ce que** la transformation est réalisée à des températures dans la plage de 20 °C à 120 °C, de préférence de 40 °C à 110 °C.

10. Procédé selon l'une quelconque des revendications 6 à 9, **caractérisé en ce qu'**un excès de H₂O d'au moins 100 %, par rapport aux groupes à condenser, est utilisé.

11. Procédé selon l'une quelconque des revendications 6 à 10, **caractérisé en ce que** la transformation comprend une étape de pré-équilibrage à des températures de T > 40 °C, suivie par une condensation initiée par un ajout d'eau à des températures de T > 60 °C, l'ajout d'eau étant réalisé en une portion, en plusieurs portions ou en continu.

12. Procédé pour la préparation de siloxanes ramifiés, organomodifiés, **caractérisé en ce que** dans une première étape des mélanges de siloxanes cycliques-ramifiés sont mis à disposition, selon l'une quelconque des revendications 1 à 5,
et
dans une deuxième étape les mélanges de siloxanes cycliques-ramifiés sont équilibrés de manière acide par des silanes et/ou des siloxanes.

13. Procédé selon la revendication 12, **caractérisé en ce que** des composés du silicium pouvant être équilibrés de manière acide par des silanes et/ou des siloxanes sont utilisés,
dans lequel, en tant que silanes, le diéthoxydiméthylsilane, des triméthylalcoxysilanes et/ou le diméthyldichlorosilane sont de préférence utilisés,
et/ou
dans lequel, en tant que siloxanes, le tétraméthyldisiloxane, des α,ω-dihydrogéno-polydiméthylsiloxanes, des poly(méthylhydrogéno)siloxanes, des α,ω-dialcoxypolydiméthylsiloxanes et/ou des α,ω-divinylpolydiméthylsiloxanes sont de préférence utilisés.

14. Procédé selon la revendication 12 ou 13, **caractérisé en ce que** dans la deuxième étape, les mélanges de siloxanes cycliques-ramifiés sont équilibrés avec des silanes et/ou des siloxanes en présence d'un catalyseur acide, de préférence l'acide trifluorométhanesulfonique, de préférence en une quantité de ≥ 0,1 % en poids.

15. Procédé selon la revendication 12 ou 13, **caractérisé en ce que** dans la deuxième étape, dans laquelle les mélanges de siloxanes cycliques-ramifiés sont équilibrés de manière acide avec des silanes et/ou des siloxanes, l'équilibrage est entrepris sur une résine de polystyrène contenant de l'eau, à acide sulfonique, macroporeuse, qui est utilisée de préférence en des quantités de 3 à 9 % en poids et qui est chargée de préférence avec 8 à 12 % en poids d'eau, et dont la surface spécifique est de préférence ≥ 35 m²/g et dont le diamètre moyen de pores est de préférence d'au moins 65 nm.

16. Procédé pour la préparation d'huiles de silicones ramifiées, **caractérisé en ce que** dans une première étape des siloxanes cycliques-ramifiés sont mis à disposition, selon l'une quelconque des revendications 1 à 5, et dans une deuxième étape les siloxanes cycliques-ramifiés sont transformés avec des polydiméthylsiloxanes ou l'hexaméthyldisiloxane.

17. Utilisation des siloxanes ramifiés, organomodifiés obtenus par équilibrage de manière acide, pouvant être obtenus selon l'une quelconque des revendications 12 à 15, en tant que matière première pour la préparation de stabilisants pour des mousses de PUR, pour la préparation d'antimousses, pour la préparation d'additifs pour laques, pour la préparation d'émulsifiants, en particulier d'émulsifiants cosmétiques, pour la préparation de conditionneurs cosmétiques, pour la préparation d'agents d'aération, pour la préparation de désémulsifiants, pour la préparation d'agents de traitement de textiles, pour la fabrication d'additifs pour la protection de bâtiments, pour la fabrication d'additifs de matière plastique, notamment d'additifs anti-éraflures, pour la fabrication d'additifs ou de revêtements anti-salissures, pour la fabrication de revêtements antigel.
